# EUROPEAN PATENT APPLICATION

(11) **EP 2 829 817 A1**
(43) Date of publication of application: **28.01.2015**
(21) Application number: 13754237.9
(22) Date of filing: 27.02.2013
(51) Int. Cl.: F24H 1/18, F24H 1/00

(54) **METHOD FOR CONTROLLING AND DEVICE FOR CONTROLLING COGENERATION SYSTEM**

(30) Priority: 29.02.2012 JP 2012043576
(71) Applicant: JX Nippon Oil & Energy Corporation, Chiyoda-ku Tokyo 100-8162 (JP)
(72) Inventor: HIWATARI, Manabu, Tokyo 100-8162 (JP)
(74) Representative: Patentanwälte Vollmann & Hemmer
(86) International application number: PCT/JP2013/055139
(87) International publication number: WO 2013/129476

(57) **Abstract**

In a cogeneration system that stores hot water heated by exhaust heat of a generator in a hot water storage tank, a situation in which there is a risk of freezing of water in a water circulating passage is accurately grasped, and thus anti-freezing control prevents the freezing from occurring and unnecessary anti-freezing control is reduced to suppress the drop in efficiency of the system. When determined that an environmental temperature Ta is lower than a lower-limit value Ta_min, it is determined whether or not a temperature difference ΔT (= Tr1 - Tr2) between a radiator inlet temperature Tr1 and a radiator outlet temperature Tr2 exceeds a predetermined value ΔT0, and when determined that the temperature difference exceeds the predetermined value ΔT0, it is determined that there is a risk of freezing of the water in the water circulating passage and an command to execute the anti-freezing control is output.

## Description

### TECHNICAL FIELD

The present invention relates to a cogeneration system which heats water by recovering heat (exhaust heat) generated from a generator, such as a fuel cell, and stores the heated water in a hot water storage tank, and in particular, relates to a technology for determining a situation in which water for recovering heat has a risk of freezing.

### BACKGROUND ART

In such a cogeneration system provided with a water circulating passage through which water is circulated between the generator and the hot water storage tank, there is a problem that water in the water circulating passage may be frozen in a cold season. In particular, a cooling radiator unit interposed in a flow passage, which supplies low-temperature water in the bottom of the hot water storage tank to the generator, is exposed to a low-temperature outside air and thus may be super-cooled, thereby the freezing of the water may easily occur in the radiator unit since the radiator itself cannot be covered with, for example, a thermal insulator.

Therefore, in Patent Document 1, water heated by a generator (fuel cell) is circulated through a radiator in such a way as bypassing the hot water storage tank to suppress freezing in a cold season. Furthermore, in Patent Document 2, water is circulated through a radiator in such a way as bypassing a hot water storage tank when a water temperature in the hot water storage tank is high, and the water in the hot water storage tank is heated by an auxiliary heat source while being circulated through the radiator when the water temperature in the hot water storage tank is low, to suppress freezing in a cold season.

### CITATION LIST

### PATENT DOCUMENTS

- Patent Document 1: Japanese Patent Application Laid-open Publication No. 2009-257656
- Patent Document 2: Japanese Paten Application Laid-open Publication No. 2007-278579

### SUMMARY OF INVENTION

### PROBLEMS TO BE SOLVED BY THE INVENTION

However, as disclosed in Patent Documents 1 and 2, conventionally, the determination condition for executing the anti-freezing control includes only an outside air temperature or a temperature correlated to the outside air temperature. Therefore, the action to a situation, in which the freezing of the water occurs in the water circulating passage or the radiator unit due to wind blowing or the decrease of the water circulating flow rate even when the outside air temperature exceeds a determination threshold level, may be not enough.

In order to avoid such a situation, if the determination threshold level of the environmental temperature is set to be high, even in a situation in which the wind is not blowing (or weak) or the water circulating flow rate is large so that there is no risk of the freezing of the water, the anti-freezing control will be performed in many cases, and thus the operation efficiency of the system may be dropped.

The present invention has been made in view of such problems in the related art and an object thereof is to provide a device and a method for controlling a cogeneration system in which the situation in which there is a risk of the freezing of the water is accurately grasped, the freezing is suppressed by the execution of the reliable anti-freezing control when needed, and the execution of unnecessary anti-freezing control is avoided to suppress the drop in operation efficiency of the system.

### MEANS FOR SOLVING THE PROBLEMS

For that reason, according to the present invention, a device for controlling a cogeneration system including: a generator for generating electricity that produces heat; a hot water storage tank that stores water; a first flow passage that supplies water in the hot water storage tank to a heat exchanging unit of the generator through a cooling radiator; a second flow passage that supplies hot water heated by the heat exchanging unit of the generator into the hot water storage tank; a water circulator that circulates water in a water circulating passage including the generator, the hot water storage tank, the first flow passage, and the second flow passage; and an anti-freezing control unit that executes anti-freezing control when determining that a freezing condition of the water circulating passage is met, includes an environmental temperature measuring unit that measures an environmental temperature Ta; a radiator temperature difference obtaining unit that obtains a temperature difference ΔT (= Tr1 - Tr2) between an inlet temperature Tr1 and an outlet temperature Tr2 of the radiator; and a freezing condition determining unit that determines that the freezing condition of the water circulating passage is met when the temperature difference ΔT between the inlet temperature and the outlet temperature of the radiator is higher than or equal to a predetermined value in a case in which the environmental temperature Ta is lower than a predetermined value.

### EFFECTS OF THE INVENTION

Even though the environmental temperature Ta is in the same temperature condition, if the wind is blowing, temperature decreases more as compared to a case in which the wind is not blowing (or weak), because the amount of cooling of the water supplied to the water circulating passage is increased by the increase of ventilation rate toward the radiator, and thus the freezing of the water may easily occur. In addition, if the water circulating flow rate is low, the temperature decreased more as compared to a case in which the water circulating flow rate is high, because the amount of cooling per unit amount of water increases, and thus the freezing of the water may easily occur.

Accordingly, it is possible to accurately grasp a situation in which there is a risk of freezing of the water by adding a determination condition, in which the temperature difference between the inlet temperature and the outlet temperature of the radiator is to be higher than or equal to a predetermined value, to the condition in which the environmental temperature is to be lower than a predetermined temperature.

Thus, it is possible to suppress the drop in the operation efficiency of the system due to the execution of unnecessary anti-freezing control while suppressing the freezing by a reliable execution of the anti-freezing control when needed.

### BRIEF DESCRIPTION OF DRAWINGS

- Fig. 1 is a block diagram schematically illustrating a cogeneration system according to the present invention.
- Fig. 2 is a flowchart according to a first embodiment of control for determining whether or not anti-freezing control is carried out in the above system.
- Fig. 3 is a flowchart according to a second embodiment of control for determining whether or not anti-freezing control is carried out in the above system.
- Fig. 4 is a flowchart according to a third embodiment of control for determining whether or not anti-freezing control is carried out in the above system.
- Fig. 5 is a flowchart according to a fourth embodiment of control for determining whether or not anti-freezing control is carried out in the above system.

### MODE FOR CARRYING OUT THE INVENTION

Hereinafter, embodiments of the present invention will be described with reference to the drawings.

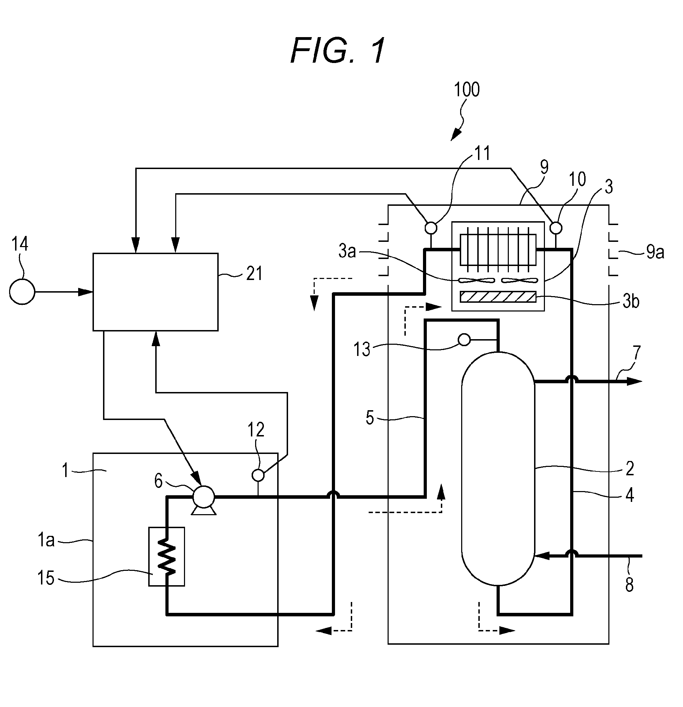

Fig. 1 is a diagram schematically illustrating a cogeneration system 100 according to embodiments of the present invention.

The system 100 includes a generator 1 that generates electricity while generating heat, a hot water storage tank 2 that stores water, a first flow passage 4 that supplies relatively low-temperature water stored in a bottom of the hot water storage tank 2 to a heat exchanging unit 15 of the generator 1 through a radiator 3, the heat exchanging unit 15, and a second flow passage 5 that supplies hot water heated by the heat exchanging unit 15 to an upper part of the hot water storage tank 2. Then, a water circulating passage is configured to circulate water between the generator 1 and the hot water storage tank 2, by a water circulator 6 interposed in the second flow passage 5.

Examples of the generator 1 include those using a gas turbine as a driving source, in addition to a fuel cell such as a polymer electrolyte fuel cell (PEFC) or a solid oxide fuel cell (SOFC).

A hot water outflow pipe 7 is connected to the upper part of the hot water storage tank 2 to effuse the hot water and a water supply pipe 8 is connected to the lower part of the hot water storage tank to supply urban water (normal-temperature water).

The radiator 3 is provided with a fan 3a and a heater 3b and is placed at an upper space within a tank housing 9 together with the hot water storage tank 2. An air vent 9a is opened at the upper part of the tank case 9.

The water circulator 6 is placed in a case 1a of the generator 1 in the present embodiment, but is not limited to this example of arrangement.

In addition, a first temperature sensor 10 that measures a radiator inlet temperature Tr1 of the circulating water, a second temperature sensor 11 that measures a radiator outlet temperature Tr2 of the circulating water, a third temperature sensor 12 that measures an outlet temperature Tf2 of the generator 1 of the circulating water, a fourth temperature sensor 13 that measures an inlet temperature Ts1 of the hot water storage tank 2, and a fifth temperature sensor 14 that measures an environmental temperature (outside air temperature) are disposed to control the water circulator 6 or the like. Then, temperature measurement values obtained by these sensors are input to a controller 21.

In the cogeneration system 100 having such a configuration, the controller 21 performs the control (for example, control for increasing the circulating flow rate of water to make the freezing difficult) to suppress freezing of the water in the water circulating passage, especially in a peripheral part of the radiator 3, which is exposed to the outside air and thus may be easily super-cooled, in a cold season such as winter.

Then, the control for determining the freezing condition for executing the anti-freezing control, that is, a situation, in which the water has a risk of the freezing in the case of leaving the system without any measure, is performed as follows.

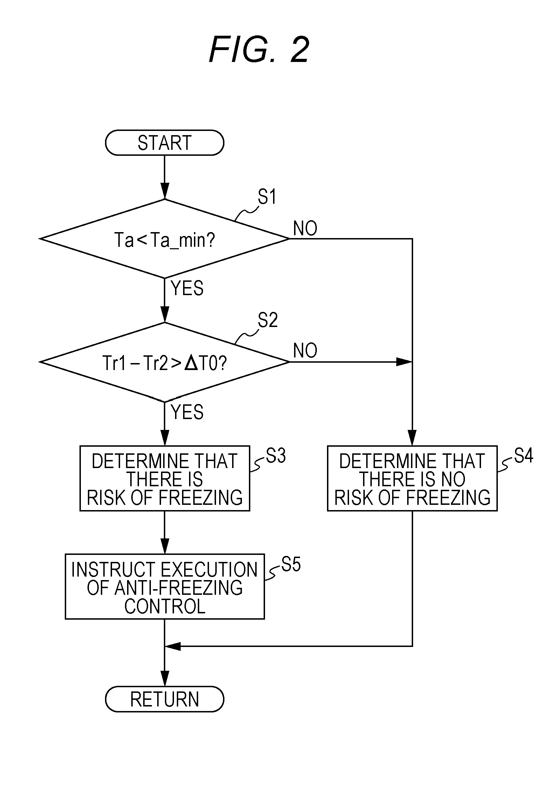

Fig. 2 illustrates a flow for determining the freezing condition.

In step S1, it is determined whether or not an environmental temperature Ta measured by the fifth temperature sensor 14 is lower than a predetermined value Ta_min at which the water in the water circulating passage has a risk of the freezing.

When it is determined that the environmental temperature Ta is lower than the predetermined value Ta_min, the process proceeds to step S2. Then, it is determined whether or not a temperature difference ΔT (= Tr1 - Tr2) between a radiator inlet temperature Tr1 measured by the first temperature sensor 10 and a radiator outlet temperature Tr2 measured by the second temperature sensor 11 exceeds a predetermined value ΔT0.

When determined that the temperature difference (Tr1 -Tr2) exceeds the predetermined value ΔT0, it is determined that there is a risk of the freezing of the water in the water circulating passage in step S3 and the command to execute the anti-freezing control is output in step S5.

An example of the anti-freezing control includes well-known control such as the control in which the radiator 3 is heated by putting the heater 3b on or the water circulating flow rate is increased by the water circulator 6 to increase the amount of water flowing through the radiator 3, thereby making the freezing difficult. Alternatively, the anti-freezing control may include control for opening a bypass passage which is provided to lead a high-temperature water coming out of the generator 1 to the radiator 3 in such a way as bypassing the hot water storage tank 2, and a combination of these controls may be also used.

Note that, during the anti-freezing control, the output of the generator 1 may be temporarily increased. Since an amount of generated heat is also increased with the increase of the output of the generator, rising water temperature is promoted, and thus it is possible to shorten the anti-freezing control time and to accelerate the shift to the normal control. At this time, when a rechargeable battery is provided in the system 100, the rechargeable battery may be charged by surplus power. In addition, the generator 1 may be connected to a rechargeable battery mounted on an electric car or a hybrid vehicle during parking to charge the rechargeable battery with the surplus power.

When determined that the environmental temperature Ta is higher than or equal to predetermined value Ta_min in step S1 or that the temperature difference (Tr1 - Tr2) is less than or equal to the predetermined value ΔT0 in step S2, it is determined that there is no risk of the freezing of the water in the water circulating passage in step S4.

According to such a method of determining a freezing condition, it is possible to accurately grasp a situation of a freezing risk by adding a determination condition in which the temperature difference ΔT between the inlet temperature Tr1 and the outlet temperature Tr2 of the radiator 3 is higher than the predetermined value ΔT0 to the condition in which the environmental temperature Ta is lower than the predetermined value Ta_min.

In the determination as to whether or not the anti-freezing control is executed using only the environmental temperature (outside air temperature) as in the prior art, even when the environmental temperature is higher than or equal to a determination threshold, if a wind is blown to the water circulating passage, particularly, radiator 3, or if the circulating flow rate of the water in the water circulating passage is low, the amount of cooling per unit amount of water may increase at the radiator 3 unit, so that the water temperature may be decreased more, and thus there is a risk of the freezing of the water in the water circulating passage.

In order to avoid such a situation, if a higher determination threshold of the environmental temperature is set, the anti-freezing control may be performed in many cases even in a situation in which the wind is not blown (weak) or the circulating flow rate of the water in the water circulating passage is large to have no risk of the freezing of the water in the water circulating passage, and thus the operation efficiency of the system 100 may be dropped.

However, according to the present embodiment, the temperature difference between the inlet and the outlet of the radiator 3 is added to the determination condition. Thus, since the temperature difference between the inlet and the outlet of the radiator 3 increases and exceeds the determination threshold when the wind is blown or the water circulating flow rate of the water circulating passage is low, it is possible to correctly detect the situation in which there is the risk of the freezing of the water in the water circulating passage.

Furthermore, the temperature difference may be increased in summer, for example, in which the environmental temperature is high, and thus, if only the temperature difference between the inlet and the outlet of the radiator is set as the determination condition, a correct determination may be no longer performed. Accordingly, it is required to be combined with an indication of the cold season in which the environmental temperature is low.

According to the present embodiment, the freezing conditions for determining that there is the risk of the freezing includes the indication of the increased temperature difference between the inlet and the outlet of the radiator 3 and the indication of a cold season in which the environmental temperature is low. Thus, it is possible to correctly determine the freezing condition to suppress the drop in the operation efficiency of the system 100 due to the execution of unnecessary anti-freezing control, while suppressing the freezing by a reliable execution of the anti-freezing control when needed.

In addition, the determination of the situation in which there is the risk of the freezing is preferably performed at all times during operation of the system 100. In specific, first, when the determination condition is met after the start-up of the system 100, the anti-freezing control is performed. As a result, it is determined that there is no risk of the freezing of the water in the water circulating passage, and then, the anti-freezing control is temporarily canceled. The determination is subsequently continued, and when the freezing condition is met again, the anti-freezing control is executed again.

In order to suppress hunting which frequently repeats the execution and cancellation of the anti-freezing control, hysteresis may be provided, so that, for example, a determination threshold for the temperature difference between the inlet and the outlet of the radiator at the time of the cancellation of the anti-freezing control is set to be smaller than a determination threshold at the time of the execution of the anti-freezing control.

As in a system using the polymer electrolyte fuel cell (PEFC) as the generator, in the system 100 which is essential to operate for a predetermined time and stop repeatedly every day, the freezing of the water in the water circulating passage may occur during the stop of the system 100.

In addition, as in the system 100 using the solid oxide fuel cell (SOFC) as the generator, in the system 100 which is essential to operate continuously, it is possible to generally suppress the freezing by executing the anti-freezing control while determining a situation in which there is a risk of the freezing of the water in the water circulating passage, but in a case of restarting the operation after the stop of the system 100 for a long time, the freezing of the water in the water circulating passage may occur during the stop.

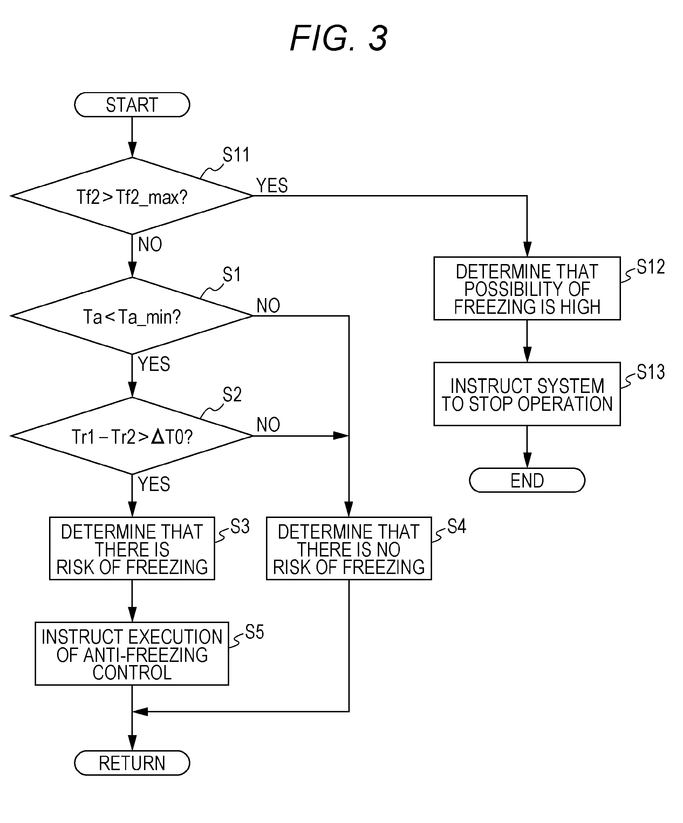

Fig. 3 illustrates a control flow of a second embodiment including a determination of such a freezing state.

In step S11, it is determined whether or not the outlet temperature Tf2 of the generator 1 exceeds a predetermined value Tf2_max in which there is a possibility of the freezing. The generator outlet temperature Tf2 of the circulating water may also be measured with a sensor for measuring an outlet temperature of the circulating water in a heat exchanging unit 15 which recovers heat from an exhaust gas in a fuel cell system, for example.

When it is determined that the generator outlet temperature Tf2 exceeds the preset value Tf2_max, the process proceeds to step S12, to determine that there is a high possibility of the freezing of the water in the water circulating passage.

That is, when the freezing of the water in the water circulating passage occurs, the water circulating passage (mainly, radiator 3) get blocked and then the water isn't circulated or a cross-sectional area of the water circulating passage is reduced, and accordingly, the water in a second flow passage 5, especially, the water staying near the outlet of the generator 1 continuously receives the heat from the generator 1 and thus the temperature thereof excessively rises. As a result, the generator outlet temperature Tf2 exceeds the predetermined value Tf2_max. Thus, it is possible to determine a situation in which there is a high possibility of the freezing.

Then, when it is determined that there is a high possibility of the freezing of the water in the water circulating passage, the command for stopping the operation of the system 100 is output in step S13, to prevent an adverse effect on the system 100 due to forced operation and thus a failure occurrence.

On the other hand, when it is determined that the generator outlet temperature Tf2 does not exceed the predetermined value Tf2_max in step S11, it is determined that there is no freezing of the water in the water circulating passage, and the process proceeds to step S1 and subsequent steps. Then, as in the first embodiment, it is determined whether or not there is a risk of the freezing of the water in the water circulating passage, and when determined that there is a risk of the freezing, the anti-freezing control is executed.

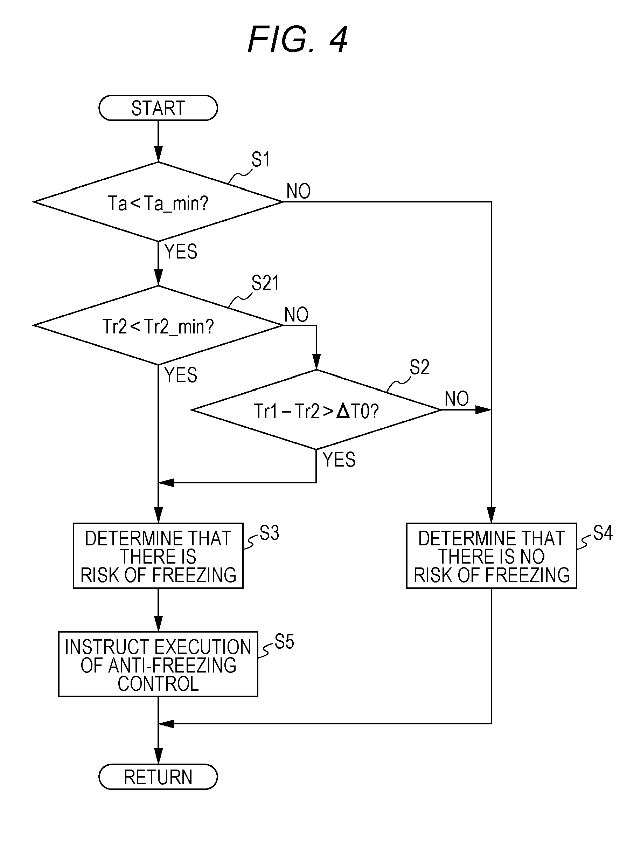

Fig. 4 illustrates a control flow of a third embodiment.
In the third embodiment, when it is determined that the environmental temperature Ta is lower than the predetermined value Ta_min in step S1 as in the control similar to the first embodiment illustrated in Fig. 2, it is determined whether or not the outlet temperature Tr2 of the radiator 3 decreases under a lower-limit temperature Tr2_min in step S21. Here, the lower-limit temperature Tr2_min may be defined to any temperature at which it is determined that the water in the water circulating passage has a risk of the freezing regardless of the presence or absence of heat radiation from the radiator 3 due to wind.

Then, when it is determined that the radiator outlet temperature Tr2 is lower than the lower-limit temperature Tr2_min in step S21, the process proceeds to step S3 without performing the determination of the temperature difference between the inlet and the outlet of the radiator in step S2. Then, it is determined that there is the risk of the freezing of the water in the water circulating passage and the command to execute the anti-freezing control is output in step S5.

When it is determined that the radiator outlet temperature Tr2 is higher than or equal to the lower-limit temperature Tr2_min in step S21, the process performs the determination of the temperature difference between the inlet and the outlet of the radiator 3 in step S2. Then, when determined that the temperature difference (Tr1 - Tr2) exceeds the predetermined value ΔT0, it is determined that there is the risk of the freezing of the water in the water circulating passage in step S3 and the command to execute the anti-freezing control is output in step S5.

That is, even when the temperature difference between the inlet and the outlet of the radiator 3 is maintained to be small, if the temperature of the water in the water circulating passage is lowered to the vicinity of the freezing temperature, the situation in which the freezing occurs regardless of super cooling in the radiator 3 may also occur. According to the third embodiment, when the outlet temperature Tr2 of the radiator 3 is lowered to a temperature lower than the lower-limit temperature Tr2_min, it is possible to handle with such a situation by executing the anti-freezing control regardless of the temperature difference between the inlet and the outlet of the radiator 3.

On the other hand, even when the outlet temperature Tr2 of the radiator 3 is higher than or equal to the lower-limit temperature Tr2_min and has still a margin with respect to the freezing temperature, since there is the risk of the freezing of the water in the water circulating passage, for example, when the airflow is high and the water circulating flow rate is low, the temperature difference between the inlet and the outlet of the radiator 3 is determined. At this time, it is possible to handle with the above situation by the execution of the anti-freezing control when determined that the temperature difference (Tr1 - Tr2) exceeds the predetermined value ΔT0.

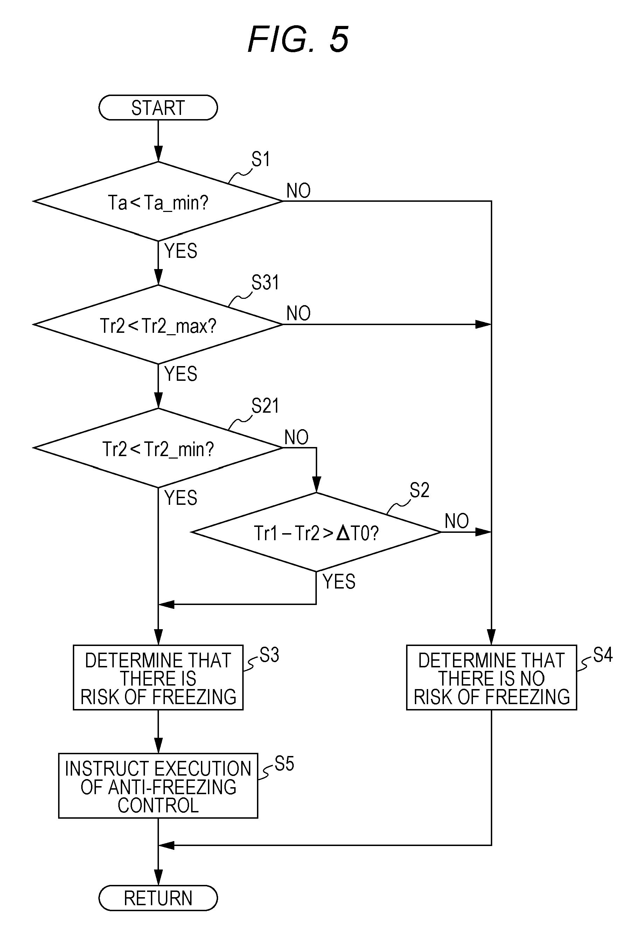

Fig. 5 illustrates a control flow of a fourth embodiment.
In the fourth embodiment, when it is determined that the environmental temperature Ta is lower than the predetermined value Ta_min in step 1 as in the control similar to the third embodiment, it is determined whether or not the outlet temperature Tr2 of the radiator 3 is lowered to be lower than an upper-limit temperature Tr2_max in step 31. Here, the upper-limit temperature Tr2_max may be defined to any temperature at which it is determined that the circulating water has no risk of the immediate freezing by heat radiation from the radiator 3 due to the wind.

When it is determined that the radiator outlet temperature Tr2 is higher than or equal to the upper-limit temperature Tr2_max in step S31, the process proceeds to step S4 without performing the determination of the temperature difference between the inlet and the outlet of the radiator in step 2, and it is determined that there is no risk of the freezing of the water in the water circulating passage, avoiding the execution of the anti-freezing control.

Even in a case in which the environmental temperature Ta is low, for example, when the water temperature in the hot water storage tank 2 is sufficiently high, the risk of the immediate freezing of the water in the water circulating passage can be deemed to be low even if the temperature difference between the inlet and the outlet of the radiator becomes higher. Therefore, in the fourth embodiment, it is possible to suppress the drop in the operation efficiency of the system 100 by the avoiding or delaying the execution of the anti-freezing control when determined that the radiator outlet temperature Tr2 is higher than or equal to the upper-limit temperature Tr2_max.

When determined that the outlet temperature Tr2 of the radiator 3 is lower than the upper-limit temperature Tr2_max in step 31, the process proceeds to step 21 and subsequent steps to perform the control which is the same as in the third embodiment and to obtain the same effects.

In the third and fourth embodiments, since it is enough to estimate the temperature of the peripheral part of the radiator 3 for the determination in steps 21 and 31, the inlet temperature Tr1 may be used instead of the outlet temperature Tr2 of the radiator 3. Alternatively, the third and fourth embodiments may be configured to determine by using a measured temperature at any location of the part of the flow passage from the outlet of the radiator 3 to the inlet of the generator 1 as the outlet temperature Tr2 and a measured temperature at any location of the part of the flow passage from the outlet of the hot water storage tank 2 to the inlet of the radiator 3 as the inlet-side temperature Tr1 and by setting the lower-limit temperature Tr2_min and the upper-limit temperature Tr2_max corresponding to the measurement location.

In addition, while the embodiments of the present invention have been described above with reference to the drawings, these embodiments have been presented by way of example only, and needless to say, the present invention includes one directly indicated by the described embodiments, as well as various improvements and modifications, which is achieved by one skilled in the art within the scope of the appended claims.

For example, the water circulator is placed in the case 1a of the generator 1 as an example in the embodiments of the present invention, but may be placed in the tank case 9. Furthermore, the heater 3b is provided in the vicinity of the radiator 3 to heat the water passing through the radiator 3 as an example in the embodiments of the present invention, but may be provided in the vicinity of the water circulating passage to heat the water in the water circulating passage.

In addition, the steps (steps S11 to S13) of stopping the determination of the freezing state and the system operation during the determination described in the second embodiment may be added to the third and fourth embodiments.

### List of reference numerals

- 1: - Generator
- 2: - Hot water storage tank
- 3: - Radiator
- 4: - First flow passage
- 5: - Second flow passage
- 6: - Water circulator
- 7: - Water outflow pipe
- 8: - Water supply pipe
- 9: - Tank case
- 9a: - Air vent
- 10: - First temperature sensor
- 11: - Second temperature sensor
- 12: - Third temperature sensor
- 13: - Fourth temperature sensor
- 14: - Fifth temperature sensor
- 15: - Heat exchanging unit
- 21: - Controller
- 100: - Cogeneration system

## Claims

1. A device for controlling a cogeneration system, which includes:
a generator for generating electricity that produces heat;
a hot water storage tank that stores water;
a first flow passage that supplies water in the hot water storage tank to a heat exchanging unit of the generator through a cooling radiator;
a second flow passage that supplies hot water heated by the heat exchanging unit of the generator into the hot water storage tank;
a water circulator that circulates water in a water circulating passage including the generator, the hot water storage tank, the first flow passage, and the second flow passage; and
an anti-freezing control unit that executes anti-freezing control when determining that a freezing condition of the water circulating passage is met,
the device comprising:
an environmental temperature measuring unit that measures an environmental temperature;
a radiator temperature difference obtaining unit that obtains a temperature difference between an inlet temperature and an outlet temperature of the radiator; and
a freezing condition determining unit that determines that a freezing condition of the water circulating passage is met when the temperature difference between the inlet temperature and the outlet temperature of the radiator is higher than or equal to a predetermined value in a case in which the environmental temperature is lower than a predetermined value.

2. The device for controlling the cogeneration system according to claim 1, further comprising a freezing determination unit that determines that freezing occurs in the water circulating passage when an outlet temperature of the generator of the water circulating passage is higher than or equal to a set upper-limit temperature.

3. The device for controlling the cogeneration system according to claim 1, in which in the freezing condition determining unit determines that the freezing condition of the water circulating passage is met regardless of the temperature difference between the inlet temperature and the outlet temperature of the radiator, when the outlet temperature or the inlet temperature of the radiator is lower than a preset lower-limit temperature in a case in which the environmental temperature is lower than the predetermined value.

4. The device for controlling the cogeneration system according to claim 1, in which in the freezing condition determining unit determines that the freezing condition of the water circulating passage is not met when the outlet temperature or the inlet temperature of the radiator is higher than or equal to a preset upper-limit temperature even in a case in which the environmental temperature is lower than the predetermined value.

5. A method for controlling a cogeneration system, which includes a generator that generates for generating electricity that produces heat, a hot water storage tank that stores water, a first flow passage that supplies water in the hot water storage tank to a heat exchanging unit of the generator through a cooling radiator, a second flow passage that supplies hot water heated by the heat exchanging unit of the generator into the hot water storage tank, and a water circulator that circulates water in a water circulating passage including the generator, the hot water storage tank, the first flow passage, and the second flow passage,
the method comprising:
measuring an environmental temperature;
obtaining a temperature difference between an inlet temperature and an outlet temperature of the radiator;
determining that a freezing condition of the water circulating passage is met when the temperature difference between the inlet temperature and the outlet temperature of the radiator is higher than or equal to a predetermined value in a case in which the environmental temperature is lower than a predetermined value; and
executing anti-freezing control when the freezing condition of the water circulating passage is met.
